# FASCICULE DE BREVET EUROPEEN

(11) **EP 1 746 635 B1**
(45) Date de publication et mention de la délivrance du brevet: **21.08.2013**
(21) Numéro de dépôt: 06291144.1
(22) Date de dépôt: 13.07.2006
(51) Int. Cl.: H01K 1/26, C03C 4/02, C03C 3/11, C03C 1/10, C03C 3/095

(54) **Verre rouge, procédé de fabrication de verre rouge, ampoules et tubes teintes obtenus avec un tel verre**
Rotes Glas, Herstellungsverfahren des roten Glases, aus diesem Glas hergestellte Glühbirne und Röhre
Red glass, production process of the red glass, bulb and tube obtained with this glass

(30) Priorité: 22.07.2005 FR 0507841
(43) Date de publication de la demande: 24.01.2007
(73) Titulaire: Vermont, 10270 Montieramey (FR)
(72) Inventeur: Lefèvre, Christian, 10220 Piney (FR); Lepesqueux, François, 10000 Troyes (FR)
(74) Mandataire: Benech, Frédéric

(56) Documents cités:
- WO-A-2004/041739
- DE-A1- 10 053 450
- FR-A- 1 498 643
- US-A- 3 779 734

## Description

La présente invention concerne un verre rouge teinté dans la masse formé à partir d'un mélange vitrifiable à base d'une composition silico-sodo-calcique.

Elle concerne également un procédé de fabrication de verre rouge, un tube et une ampoule obtenues avec un tel verre.

Elle trouve une application particulièrement importante bien que non exclusive dans le domaine des ampoules de signalisation (feux arrières, feux de stop) de véhicules automobiles.

Par couleur rouge il faut entendre la teinte rouge qui s'inscrit dans l'aire telle que définie par les normes internationales et notamment dans le référentiel de la commission internationale de l'éclairage connu sous la dénomination CIE1931.

En Europe, l'espace colorimétrique défini par la régulation ECE correspond à une zone trapézoïdale dont les coordonnées en X et Y sont les suivantes :
A (0,657-0,335)
B (0,665-0,335)
C (0,735-0,265)
D (0,730-0,263).

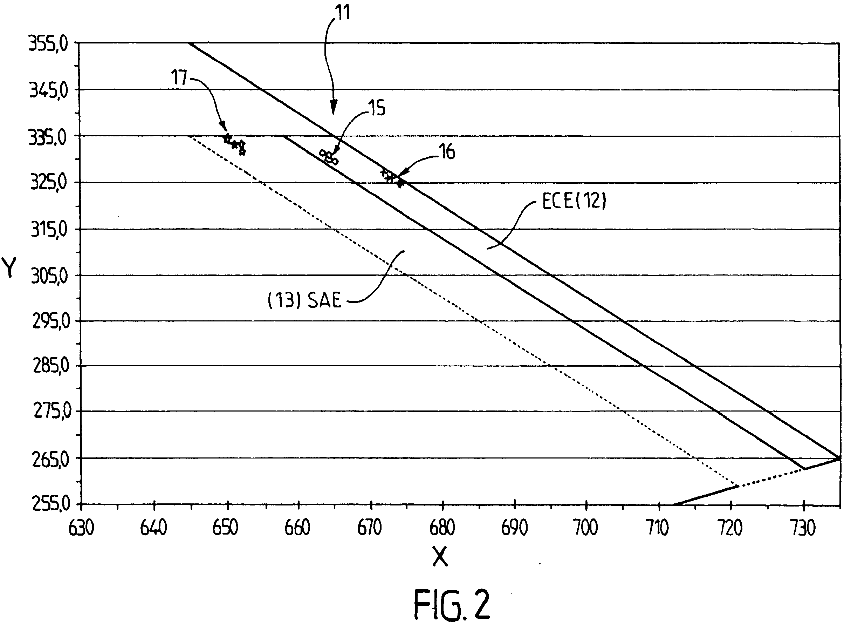

Ces points délimitent la surface réservée au rouge de signalisation correspondant à l'espace colorimétrique normalisé représenté sur la figure 2 accompagnant la présente description.

La commission internationale de l'éclairage a défini quant à elle un standard de couleur à travers la norme SAE J 578 dont les limites sont les suivantes :
Limite vers le jaune : Y = 0,33
Limite vers le pourpre : Y = 0,98-X

Les limites se traduisent par un quadrilatère dont la représentation graphique est également montrée sur la figure 2.

De façon plus générale, le GTB (Groupe de Travail de Bruxelles) a adopté pour fixer la zone réservée au rouge de signalisation automobile l'espace élargi comprenant les zones ECE et SAE.

Traditionnellement ces couleurs sont obtenues dans les verres de base sodo-calcique par l'addition de cadmium et de sélénium.

L'utilisation de ce procédé a été néanmoins remis en cause à partir de 1991 par une directive européenne (n° 91/338/CEE) visant à restreindre l'usage de certains métaux lourd dont le cadmium fait parti.

Une autre méthode permet d'obtenir du rouge, dans laquelle on ajoute de l'oxyde de cuivre à une base de verre de type sodo-calcique.

La demande de brevet DE 100 53 450 décrit un verre rouge à base d'une composition silico-sodo-calcique, caractérisé en ce que ledit verre comprend de l'oxyde d'étain, du métal du groupe du platine, et du cuivre ou de l'argent.

Cette technique est utilisée par la demanderesse depuis de nombreuses années pour la fabrication d'ébauches destinées à l'éclairage décoratif ou pour des applications de chauffage à basses températures (rayonnement infrarouge).

Cependant, elle présente des difficultés d'obtention et rend complexe la maîtrise du processus, particulièrement dans l'industrie de la lampe d'éclairage où les épaisseurs sont faibles (0 , 5 à 1 mm).

Les techniques de l'art antérieur présentent de plus un important inconvénient. En effet, elles engendrent une faible transmission lumineuse (8 à 15% de l'énergie émise) ne permettant pas la fourniture de produits utilisables en signalisation notamment automobile.

La présente invention vise à pallier ces inconvénients en ce qu'elle peut permettre la production de verre rouge dont les coordonnées chromatiques se situent à l'intérieur de la norme définissant le rouge de signalisation, et ce avec une transmission globale du flux lumineux améliorée de l'ordre de 20%.

Pour ce faire elle propose un verre rouge, un procédé de fabrication du verre rouge, un tube et une ampoule ainsi teintée répondant mieux que ceux antérieurement connus aux exigences de la pratique, notamment en ce qu'elle propose un verre dénué de matériaux toxiques assujettis à réglementations et/ou dangereux pour l'environnement tel que le plomb, le cadmium, le sélénium, ou le chrome, et en ce que le verre obtenu présente une couleur rouge qui s'inscrit dans le cadre des normes internationales de la signalisation en vigueur, est stable dans le temps et n'est pas sensible aux chocs thermiques tout en autorisant une meilleure transmission du flux lumineux.

Dans ce but la présente invention propose un verre rouge teinté dans la masse formé à partir d'un mélange vitrifiable à base d'une composition silico-sodo-calcique, caractérisé en ce que ledit mélange comprend pour 100% en poids de mélange, de 0,1% à 1% en poids de cuivre, de 0,2% à 2% en poids d'étain et de 0,01 à 2,5% en poids d'oxydes du groupe des lanthanides et/ou de 0,01% à 0,5% d'argent sous forme d'oxyde ou de nitrate d'argent.

Dans des modes de réalisation avantageux on a de plus recours à l'une et/ou à l'autre des dispositions suivantes :
- le lanthanide est de l'erbium ou du néodyme;
- le cuivre est introduit sous la forme d'oxyde cuivreux ou protoxyde de cuivre rouge Cu₂O, une partie du cuivre étant de plus apportée par du chlorure cuivrique.
   On notera ici que le métal apporté par l'oxyde de cuivre se solubilise à hautes températures pour former une solution sursaturée qui, lors d'un refroidissement lent va précipiter à basses températures avec formation de particules de cuivre métal dont les dimensions vont faire varier la teinte. On est ici en présence d'une teinte dite colloïdale dont l'absorption sélective du métal à l'état finement divisé (état atomique) transmet le rouge par absorption du bleu et du vert ;
- les dimensions des particules de cuivre sont comprises entre de l'ordre de 10 et de l'ordre de 100 nm et plus avantageusement entre 30 et 70 nm. Par de l'ordre de il faut entendre ± 1 à 2 nm. Entre ces deux valeurs on observe en effet que le verre développe des nuances de rose à rubis foncé (refroidissement contrôlé). Au delà de 100nm, la teinte toujours rubis par transparence présente une opalisation brune par réflexion due à des amalgames de particules trop importantes (refroidissement très lent). Cette forme de cristallisation peut par exemple être mise en évidence par examen au MEB (Microscope Electronique à Balayage).
- l'étain est introduit sous forme d'oxyde stanneux (SnO) ou sous forme stanique (SnO2). Bien que n'étant pas en lui même un colorant, l'étain va jouer le rôle d'agent de nucléation et permettre le bon développement de la teinte et participe à son homogénéité. C'est également un élément à valence variable qui concourre à la réduction des composés ioniques de cuivre (piégeage d'électrons) selon la formule : Cu++ + Sn²+ = Cu° + Sn4+ ;
- le mélange comprend des réducteurs favorisant la transformation de l'oxyde en cuivre métallique à l'état de division extrême pris parmi les éléments suivants : coke pulvérisé, charbon, carbone, sucre, bismuth, tartre, et/ou poudres métalliques (régule d'antimoine, zinc, aluminium);
- le verre est soumis à un traitement thermique après formage (recuisson) dans la forme suivante :
   Le verre formé (ébauches, tubes) est véhiculé pendant un temps déterminé compris entre de l'ordre de 20 mn et de l'ordre de 45 mn au travers d'une suite d'au moins trois caissons de chauffe indépendants par exemple sept caissons numérotés de 1 à 7 dans l'ordre de circulation du flux, entre la température de sortie de four et la température de sortie des caissons, la température à l'intérieur du caisson n° 2 étant comprise ente de l'ordre de 520°C et 580°C, avantageusement entre de l'ordre de 540°C et 565°C.

Dans la pratique et de façon connue en elle même des prélèvements de pièces s'effectuent chaque heure et un contrôle au colorimètre permet de visualiser d'éventuelles dérives qui sont corrigées immédiatement par une modification des paramètres de traitement tels que vitesse de défilement du tapis et/ou modifications des températures sur une ou plusieurs zones de l'arche ou tunnel de refroidissement.

On observe alors que le verre rouge ainsi produit est exempt de produits toxiques ou dangereux pour l'environnement, que sa couleur est stable dans le temps, n'est pas sensible aux chocs thermiques ni aux variations d'humidité et aux températures élevées, avec des nuances de couleur proposées qui vont du très clair au très foncé.

De plus chaque nuance est stable lors de la fabrication et peut s'inscrire dans les limites fixées par le cahier des charges du client.

Dans des modes de réalisation, le verre rouge teinté dans la masse à base d'une composition sodo-calcique, comprend pour 100% en poids de verre fondu :
SIO2 : 69 - 75 %
Na2O : entre 2 et 8%
K2O : entre 5 et 15%
B2O3 : entre 0,5 et 4%
LiO2 : entre 0,1 et 3%
CaO : entre 5 et 9%
MgO : entre 0,2 et 1%
Al203 : entre 0,2 et 2%
CuO : entre 0,2 et 1,5%
SnO : entre 0,2 et 2%
Cl : entre 0,02 et 0,3%
Er2O3 : entre 0,01 et 2,5%
Nd₂O₃ : entre 0 et 2,5%
Ag₂O : entre 0 et 0,5%
sachant qu'au moins une proportion du cuivre est introduit sous forme de chlorure cuivrique (CuCl2) dont le rôle est de participer à l'affinage et d'améliorer la transmission.

On notera que des éléments comme Fe2O3, TiO2, ZrO2 etc ne sont pas ajoutés volontairement, mais sont présents en tant qu'impuretés.

Dans des modes de réalisation, le verre rouge teinté dans la masse a les propriétés physiques, autour des suivantes (par autour, il faut entendre compris dans des fourchettes de +/- 10 °C):
Melting point (log η = 2) 1435°C
Working point (log η = 4) 995°C
Softening point (log η = 7.6) 690°C
Annealing point (log η = 13) 505°C
Tg (log η = 13.3) 495°C
Strain point (log η = 14.5) 475°C
Δl 20/300° = 93.10₋₇

L'invention propose aussi un mélange permettant d'obtenir le verre rouge ci-dessus.

Elle propose également des ébauches et/ou des tubes en verre rouge du type décrit ci-dessus.

Les ébauches en verre rouge ainsi fournies peuvent être utilisées pour le montage d'ampoules à incandescence destinées à la signalisation des véhicules, l'éclairage domestique et de décoration, le chauffage basse température et le séchage et au domaine médical et paramédical (thérapie de la douleur).

L'invention propose également un procédé d'obtention du verre rouge tel que décrit ci-avant.

Dans un mode de réalisation avantageux du procédé selon l'invention, on contrôle la nuance de la teinte du verre en modifiant les paramètres d'oxydoréduction à l'intérieur du four de chauffe par ajustement da la quantité d'un réducteur à base de poudre métallique jusqu'à hauteur de 0,3% en poids du mélange.

L'invention propose également une ampoule ou un tube en verre rouge pour un système d'éclairage, par exemple domestique et de décoration, obtenue à partir d'une ébauche et d'un procédé tels que décrits ci-avant, ou encore pour utilisation comme moyens de signalisation d'automobiles.

L'ébauche formée à partir d'une goutte de verre dès la sortie du four, et dont la teinte rouge rentre dans les normes de couleurs requises est ainsi obtenue de façon définitive avec un traitement spécifique.

Comme nous l'avons vu précédemment, l'obtention de la teinte rouge est lié à la composition chimique de base, aux conditions de fusion maîtrisées et régulées mais également aux conditions du traitement thermique dans l'arche ou tunnel de refroidissement contrôlé tout de suite après le formage.

L'invention sera mieux comprise à la lecture de la description qui suit de modes de réalisation de l'invention donnés à titre d'exemples non limitatifs.

La description se réfère aux dessins qui l'accompagnent dans lesquels :
- La figure 1 est une vue latérale d'une ampoule réalisée avec un verre fabriqué selon l'invention.
- Les figures 1A à 1C sont des vues latérales d'ébauches en verre pour différentes formes d'ampoules selon l'invention.
- La figure 2 donne le diagramme montrant l'espace colorimétrique normalisé dans lequel se placent de façon fiable et stable les colorations des ampoules rouges selon l'invention.
- La figure 3 est une vue en perspective schématique d'un dispositif mettant en oeuvre un mode de réalisation du procédé selon l'invention appliqué à des ampoules.
- Les figures 4 et 5 sont respectivement des vues latérales et de dessus d'un mode de réalisation de l'arche de refroidissement/recuisson, de la figure 3.

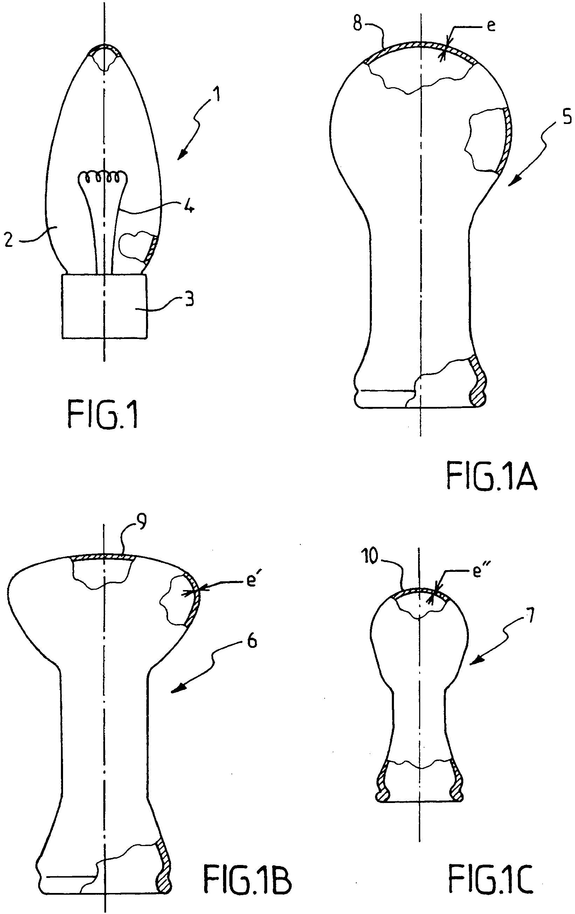

La figure 1 montre une ampoule 1, comprenant une ébauche de verre 2, en forme de fuseau, à base de verre du type SiO2-R2O-RO où R2 est un élément alcalin et RO un élément alcalino-terreux.

L'ébauche est de couleur rouge. Elle est obtenue à partir d'un mélange vitrifiable formé avec du sable de la région de Fontainebleau (France) et comprend par exemple pour 100% en poids de mélange, 0,5% en poids de cuivre, 1% en poids d'étain, 2% en poids d'oxyde de lanthanide et/ou 0,2% de nitrate d'Argent.

L'ampoule 1 comprend de façon connue en elle-même un culot 3 de connexion avec un système d'alimentation électrique, et un filament 4.

Ainsi, avec l'invention l'utilisation du mélange vitrifiable décrit ci-avant, accompagné de la maîtrise des paramètres de fusion (température et temps de séjour dans le four) connue en elle-même, une oxydo-réduction du bain de verre optimisée grâce aux proportions adaptées, et la mise oeuvre d'un refroidissement adéquat, comme cela va être décrit plus précisément ci-après permet la fabrication d'ébauches en direct dans la teinte désirée.

On a représenté sur les figures 1A, 1B et 1C d'autres modes de réalisation d'ébauches de verre 5, 6 et 7 obtenue par soufflage d'une goutte de verre teinté dans la masse selon l'invention, l'ébauche 1C étant prévue par exemple pour clignotant d'automobile.

L'épaisseur e, e', e'' de la paraison 8, 9, 10, des ébauches pour ampoule dans leur partie éclairante est de l'ordre de 4/10^{e} de mm. Elle est fonction du poids du verre et de sa viscosité, avec une dispersion pouvant aller jusqu'à de l'ordre de 2/10^{e} de mm, les caractéristiques ci-dessus étant également applicables à l'ampoule de la figure 1.

Dans l'art antérieur il était difficile voire impossible de donner systématiquement une teinte précise à épaisseur de paraison égale, ce qui entraînait éventuellement des teintes en dehors de la norme de couleur recherchée en fonction de la variation de couleurs incontrôlable, oscillant autour de la moyenne.

Avec l'invention, la dispersion n'étant plus due qu'à la différence d'épaisseur à peu près contrôlable mécaniquement, les teintes sont maintenant toujours dans la fourchette acceptable.

On a représenté sur la figure 2 le diagramme 11 de chromaticité montrant les caractéristiques de couleur de verres dans le rectangle de couleur rouge des verres selon l'invention selon la Norme ECE « Economic commission of Europe » (référencée 12) et selon la norme SAE « Society of automotive engineers » (référencée 13). Les limites pour la couleur rouge dans ces normes peuvent être traduites par des quadrilatères élargies sur le diagramme, la norme ECE 12 étant inclue dans le quadrilatère le plus large de la norme SAE 13, vers la zone de plus haute pureté de la couleur.

Les étoiles 14, les losanges 15 et les croix 16 correspondent aux compositions de verres ayant les caractéristiques électriques et photométriques moyennes suivantes :

| | Φ [µλ] | P (W) | η (lm/W) | Transparence |
|---|---|---|---|---|
| Verre blanc | 443,9 | 25,6 | 17,4 | |
| Verre rouge * (16) | 96,8 | 25,5 | 3,8 | 21,8% |
| Verre rouge ◊ (15) | 86,1 | 25,5 | 3,38 | 19,4% |
| Verre rouge + (16) | 79 | 25,4 | 3,11 | 17,8% |

On notera qu'avec l'invention la transparence obtenue est alors très supérieure (>15%) à celles des verres rouge de l'art antérieur.

Les comparatifs avec les normes se font visuellement, des mesures colorimétriques étant menées à l'aide d'une sphère d'intégration et d'un colorimètre fabriqué par la société japonaise MINOLTA sous la référence Chroma-meter CL100 relié à un calculateur de type connu, par exemple un calculateur de la société MINOLTA connu sous la référence DP100 pour avoir des valeurs globales de couleur.

Des mesures sur des zones plus précises sont ensuite réalisées à l'aide d'un colorimètre de marque THOMA sous la référence TF6-120.

Dans les deux cas, l'illuminant est normalisé de type "A", dont la température de couleur proximale est de 2856°K. Cet illuminant est relié à une alimentation stabilisée dont la tension est ajustée à 13,5V.

Les mesures se font sur deux points x et y selon le référentiel CIE 1931 (Commission internationale de l'éclairage). Elles permettent de définir la saturation, la longueur d'onde dominante ainsi que la position de la couleur de l'échantillon sur le diagramme de chromaticité mais surtout la position par rapport aux deux normes existantes définissant la teinte rouge destinée à la signalisation.

Sur cet espace de couleur, sont donc positionnées les figures géométriques (étoiles 15, croix 17, ...) représentatives de quelques nuances de teinte que les pondérations en cuivre, en étain et en lanthanides permet d'atteindre.

L'augmentation de ce rapport, démontre la capacité de production d'une multitudes de nuances différentes.

Les ébauches ainsi fournies dans des nuances de teinte adaptée peuvent également être utilisées pour le montage de lampes d'éclairage domestiques et/ou de décoration avec une grande diversité de formes et de teintes réalisables.

Ainsi les verres produits peuvent remplacer avantageusement les ampoules fantaisies destinées à la décoration et revêtues d'un vernis rouge comme par exemple montrés sur les figures 1, 1A et 1B.

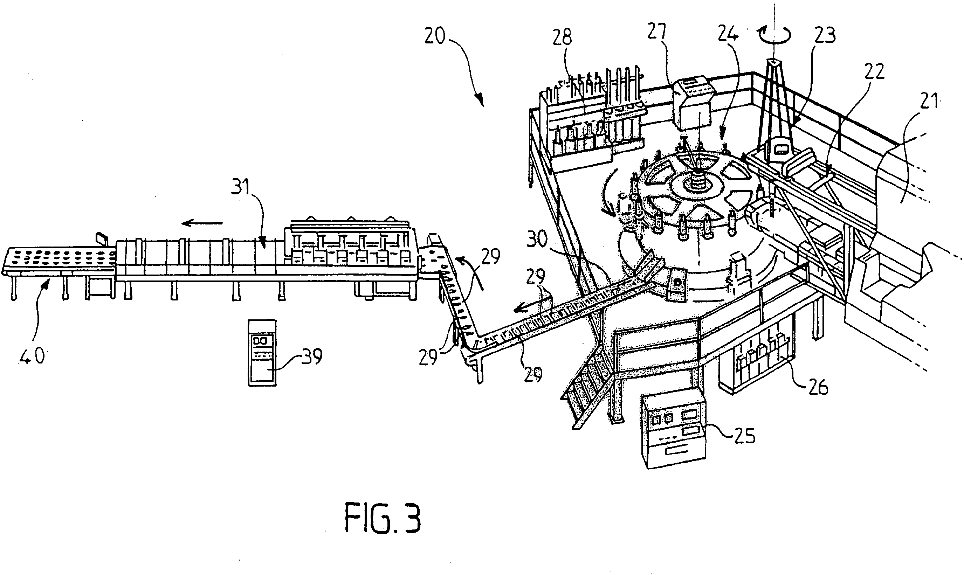

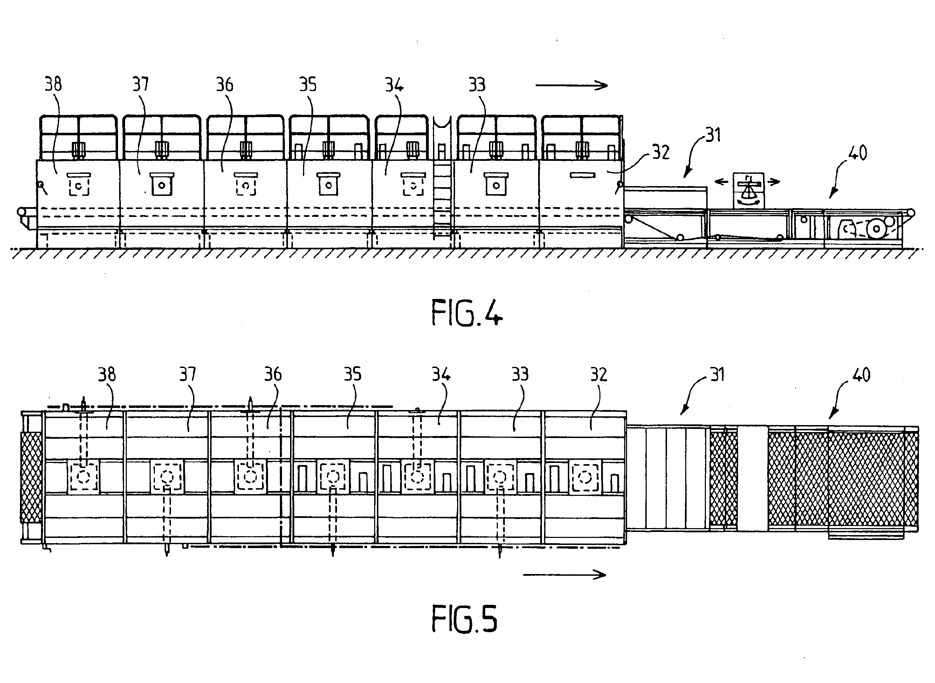

On va maintenant décrire en référence aux figures 3 et 4 et de façon nullement limitative, les procédés de fabrication d'ébauches en continu selon le mode de réalisation de l'invention plus particulièrement décrit ici.

La figure 3 montre un dispositif 20 permettant de mettre en oeuvre le mode de réalisation du procédé selon l'invention plus particulièrement décrit ici.

Il comporte le four de fusion du verre 21, un canal 22 de remplissage de verre en fusion à partir du four, un distributeur 23 alimentant le carrousel 24 de formation des ébauches dont le fonctionnement sera décrit plus précisément ci-après, des moyens de régulation et de contrôle par automate 25 d'alimentation en air comprimé 26, d'alimentation en air de refroidissement 27 et de régulation et de distribution de l'air soufflé 28.

Celui-ci comporte notamment un compresseur et des moyens de stabilisation de la pression exercée lors du soufflage par une chaîne de contrôle de procédé avec automate.

Le carrousel alimente ensuite en ébauches formées 29, un convoyeur à bandes 30 qui traverse en continu une arche de refroidissement 31 qui va tout d'abord maintenir la température des ébauches à environ 550° durant par exemple 1 à 2mn de façon à libérer le verre de ses tensions mécaniques internes créées lors du refroidissement brutal (1200° à 580°) sur la machine durant le moulage puis refroidir ces ébauches lentement (20 à 30mn) jusqu'à la température ambiante pour obtenir la couleur rouge dans la nuance recherchée.

L'arche de recuisson est adaptée pour ce type de teinte.

Son dimensionnement ainsi que l'agencement des zones de chauffe multiples permettent de maîtriser la stabilité de la couleur ou de ses nuances en temps réel sans affecter pour autant le processus même de recuisson inhérent à toutes fabrications verrières à chaud.

L'arche dont une représentation est également effectuée (figures 4 et 5) est composée de sept caissons de chauffe 32, 33, 34, 35, 36, 37 et 38 ou refroidissement totalement indépendants.

Les températures ainsi que la régulation sont propres à chacun des caissons et permettent des réglages multiples et fiables.

Tous les caissons sont équipés de ventilateurs centrifuges dont le but est de brasser de l'air pour maintenir un gradient faible sur la totalité du volume du caisson.

La température optimale permettant un bon développement de la couleur se situe à l'intérieur du caisson 37 entre 540° et 565°C.

La température est ensuite baissée progressivement selon les articles ou la position de la couleur dans le diagramme colorimétrique jusqu'à la température ambiante.

La durée totale de passage dans l'arche 31 varie de l'ordre de 20mn à de l'ordre de 45mn.

Des moyens de contrôle 39 (automate) permettent la bonne opération du tapis convoyeur, les ébauches obtenues en continu à une cadence par exemple de 90 la minute et à leur couleur définitive après passage par l'arche 31, pour passer donc de 500°C/600°C à 40°C.

Elles sont récupérées à la sortie du tunnel en 40 pour être stockées.

Les différentes étapes/postes de formation pour une fabrication par soufflage sont maintenant décrites ci-après.

Après préparation du mélange dans les proportions déterminées, on l'introduit par batch successif dans le four pour alimenter le bain de verre en fusion. La pâte de verre est ainsi portée de façon connue à la température de 1350°C à 1500°C, où elle se maintient pendant un temps déterminé de fusion de façon à la portée de l'homme du métier.

La pâte en fusion s'écoule lentement vers le carrousel 24, pour être prélevée à une température de l'ordre de 1150°C à partir d'une cuvette, la formation de l'ébauche étant ensuite effectuée en fonction des étapes suivantes.
- 41.: Préparation du verre. (Température cuvette)
- 42.: Formation de la goutte. (Feeder plongeur)
- 43.: Coupe de la goutte. (Ciseaux)
- 44.: Position de la goutte sur le marbre.
- 45: Pressage de la goutte en forme de pastille.
- 46: Transfert et dépôt sur la table.
- 47.: Refroidissement localisé de la pastille.
- 48.: Refroidissement d'allongement.
- 49.: Pulvérisation à l'eau des 1/2 moules garnis.
- 50.: Début de rotation des tables.
- 51.: Elimination des excès d'eau dans les moules.
- 52.: Auto-formation de la paraison.
- 53.: Descente de la buse formation de la bague.
- 54.: 1^{er} soufflage dans la paraison.
- 55.: Soufflage sur l'extérieur des paraisons.
- 56.: 2^{ème} soufflage dans la paraison.
- 57.: Fermeture des moules.
- 58.: 1^{er} soufflage de remplissage.
- 59.: 2^{ème} soufflage de finition.
- 60.: Remontée de la buse.
- 61.: Ouverture du moule.
- 62.: Chalumeau de réchauffage.
- 63.: Arrêt de rotation de la table.
- 64.: Séparation de la bagué dans l'ébauche.
- 65.: Ejection de l'ébauche.
- 66.: Ejection de la bague, arrosage des tables.
- 67.: Refroidissement à l'air des tables.
- 68.: Convoyage des objets à l'arche de refroidissement.
- 69.: Entrée dans l'arche de refroidissement.

Dans le mode de réalisation plus particulièrement décrit, cet équilibre est encore renforcé par la présence de réducteur tel que l'aluminium en poudre, une forte oxydation conduisant toujours à une perte de la couleur.

Comme il va de soi et comme il résulte également de ce qui précède, la présente invention n'est pas limitée aux modes de réalisation plus particulièrement décrits. Elle en embrasse au contraire toutes les variantes et notamment celles où ce sont des tubes et non des ébauches qui sont ainsi réalisés.

## Revendications

1. Verre rouge teinté dans la masse formé à partir d'un mélange vitrifiable à base d'une composition silico-sodo-calcique, **caractérisé en ce que** ledit mélange comprend pour 100% en poids de mélange, de 0,1% à 1% en poids de cuivre, de 0,2% à 2% en poids d'étain et de 0,01 à 2,5% en poids d'Oxyde du groupe des lanthanides et/ou de 0,01 à 0,5 % en poids d'argent sous forme d'oxyde ou de nitrate d'argent.

2. Verre rouge selon la revendication 1 **caractérisé en ce que** le lanthanide est de l'erbium ou du néodyme.

3. Verre rouge selon l'une quelconque des revendications précédentes, **caractérisé en ce que** le cuivre est introduit sous la forme d'oxyde cuivreux ou protoxyde de cuivre rouge Cu₂O, une partie du cuivre étant de plus apportée par du chlorure cuivrique.

4. Verre rouge selon l'une quelconque des revendications précédentes, **caractérisé en ce que** les dimensions des particules de cuivre sont comprise entre de l'ordre de 10 à de l'ordre de 100 nm.

5. Verre rouge selon la revendication 4, **caractérisé en ce que** les dimensions de particules de cuivre sont comprises entre de l'ordre de 30 et de l'ordre de 70 nm.

6. Verre rouge selon l'une quelconque des revendications précédentes, **caractérisé en ce que** l'étain est introduit sous forme d'oxyde stanneux (SnO) ou sous forme stanique (Sn02).

7. Verre selon l'une quelconque des revendications précédentes, **caractérisé en ce que** le mélange comprend des réducteurs favorisant la transformation de l'oxyde en cuivre métallique à l'état de division extrême pris parmi les éléments suivants : coke pulvérisé, charbon, carbone, sucre, bismuth, tartre, poudres métalliques (régule d'antimoine, zinc, aluminium).

8. Verre rouge teinté dans la masse à base d'une composition sodo-calcique, selon la revendication 1, comprenant pour 100% en poids de verre fondu :
SIO2 : 69 - 75 %
Na2O : entre 2 et 8%
K2O : entre 5 et 15%
B2O3 : entre 0,5 et 4%
LiO2 : entre 0,1 et 3%
CaO : entre 5 et 9%
MgO : entre 0,2 et 1%
Al203 : entre 0,2 et 2%
CuO : entre 0,2 et 1,5%
SnO : entre 0,2 et 2%
Cl : entre 0,02 et 0,3%
Er2O3 : entre 0,01 et 2,5%
Nd₂O₃ : entre 0 et 2,5%
Ag₂O : entre 0 et 0,5%
sachant qu'au moins une proportion du cuivre est introduit sous forme de chlorure cuivrique (CuCl2) dont le rôle est de participer à l'affinage et d'améliorer la transmission.

9. Procédé de fabrication d'un verre rouge à partir d'un mélange à base d'une compositions silico-sodo-calcique **caractérisé en ce que** on ajoute au mélange, pour 100% en poids, de 0,1 % à 1% en poids de cuivre, de 0,2% à 2% en poids d'étain et de 0,01 à 2,5% en poids d'oxyde de lanthanide et/ou de 0,01 à 0,5 % en poids d'argent sous forme d'oxyde ou de nitrate d'argent.

10. Procédé de fabrication d'un verre rouge selon la revendication 9 **caractérisé en ce que** le lanthanide est de l'erbium et/ou du néodyme.

11. Procédé selon l'une quelconque des revendications 9 et 10, **caractérisé en ce que** on traite thermiquement le verre après formage de la façon suivante :
Le verre formé (ébauches, tubes) est véhiculé pendant un temps déterminé compris entre de l'ordre de 20 mn et de l'ordre de 45 mn au travers d'une suite d'au moins trois caissons de chauffe indépendants numérotés dans l'ordre de circulation du flux, entre la température de sortie de four et la température de sortie des caissons, la température à l'intérieur du caisson n° 2 étant comprise entre de l'ordre de 520°C et 580°C, avantageusement entre de l'ordre de 540°C et 565°C.

12. Procédé de fabrication d'un verre rouge selon l'une quelconque des revendications 9 à 11, caractérisé en ce le cuivre est introduit sous forme d'oxyde cuivreux ou protoxyde de cuivre rouge CuO2, une partie du cuivre étant de plus apportée par du chlorure cuivrique.

13. Procédé de fabrication d'un verre rouge selon l'une quelconque des revendications 9 à 12, **caractérisé en ce que** l'étain est introduit sous forme d'oxyde stanneux (SnO) ou sous forme stanique (Sn02).

14. Ampoule en verre rouge pour système d'éclairage obtenue à partir d'une ébauche ou d'un tube produit avec le verre selon l'une quelconque des revendications 1 à 8, pour utilisation comme feu de stop ou de signalisation d'automobiles.

## Patentansprüche

1. Durchgefärbtes rotes Glas, das aus einem Glas bildenden Gemisch aus einer Silizium-Natrium-Kalzium-Mischung hergestellt ist,
**dadurch gekennzeichnet,**
**dass** das Gemisch bezogen auf 100 Gew.-% des Gemisches 0,1 Gew.-% bis 1 Gew.-% Kupfer, 0,2 Gew.-% bis 2 Gew.-% Zinn und 0,01 Gew.-% bis 2,5 Gew.-% Oxid aus der Gruppe der Lanthanide und/oder 0,01 Gew.-% bis 0,5 Gew.-% Silber in Form von Silberoxid oder -nitrat enthält.

2. Rotes Glas nach Anspruch 1,
**dadurch gekennzeichnet,**
**dass** es sich bei dem Lanthanid um Erbium oder um Neodym handelt.

3. Rotes Glas nach einem beliebigen der vorhergehenden Ansprüche, **dadurch gekennzeichnet,**
**dass** das Kupfer in Form von Kupfer(II)-oxid oder rotem Kupferoxid Cu₂O zugesetzt wird, wobei ein Teil des Kupfers zusätzlich durch Kupfer(II)-chlorid bereitgestellt wird.

4. Rotes Glas nach einem beliebigen der vorhergehenden Ansprüche, **dadurch gekennzeichnet,**
**dass** die Größen der Kupferpartikel in der Größenordnung zwischen 10 und 100 nm liegen.

5. Rotes Glas nach Anspruch 4,
**dadurch gekennzeichnet,**
**dass** die Größen der Kupferpartikel in der Größenordnung zwischen 30 und 70 nm liegen.

6. Rotes Glas nach einem beliebigen der vorhergehenden Ansprüche, **dadurch gekennzeichnet,**
**dass** das Zinn in Form von Zinn(II)-oxid (SnO) oder in Zinn(IV)-Form (SnO₂) zugesetzt wird.

7. Glas nach einem beliebigen der vorhergehenden Ansprüche,
**dadurch gekennzeichnet,**
**dass** das Gemisch Reduktionsmittel enthält, die die Umsetzung des Oxids zu feinstverteiltem Kupfermetall begünstigt und die aus den folgenden Elementen gewählt werden: Koksstaub, Kohle, Kohlenstoff, Zucker, Wismut, Weinstein, metallische Pulver (gediegenes Antimon, Zink, Aluminium).

8. Durchgefärbtes rotes Glas auf Basis einer Natrium-Kalzium-Mischung nach Anspruch 1, das bezogen auf 100 Gew.-% des Schmelzglases Folgendes enthält:
| | |
|---|---|
| SiO₂ | 69-75% |
| Na₂O | zwischen 2 und 8 % |
| K₂O | zwischen 5 und 15 % |
| B₂O₃ | zwischen 0,5 und 4 % |
| LiO₂ | zwischen 0,1 und 3 % |
| CaO | zwischen 5 und 9 % |
| MgO | zwischen 0,2 und 1 % |
| Al₂O₃ | zwischen 0,2 und 2 % |
| CuO | zwischen 0,2 und 1,5 % |
| SnO | zwischen 0,2 und 2 % |
| Cl | zwischen 0,02 und 0,3 % |
| Er₂O₃ | zwischen 0,01 und 2,5 % |
| Nd₂O₃ | zwischen 0 und 2,5 % |
| Ag₂O | zwischen 0 und 0,5 % |
wobei mindestens ein Kupferanteil in Form von Kupfer(II)-chlorid (CuCl₂) zugesetzt wird, dessen Rolle darin besteht, zur Läuterung beizutragen und die Übertragung zu verbessern.

9. Verfahren zur Herstellung eines roten Glases aus einem Gemisch aus einer Silizium-Natrium-Kalzium-Mischung,
**dadurch gekennzeichnet,**
**dass** dem Gemisch bezogen auf 100 Gew.-% des Gemisches 0,1 Gew.-% bis 1 Gew.-% Kupfer, 0,2 Gew.-% bis 2 Gew.-% Zinn und 0,01 Gew.-% bis 2,5 Gew.-% Lanthanidoxid und/oder 0,01 Gew.-% bis 0,5 Gew.-% Silber in Form von Silberoxid oder -nitrat zugesetzt werden.

10. Verfahren zur Herstellung eines roten Glases nach Anspruch 9,
**dadurch gekennzeichnet,**
**dass** es sich bei dem Lanthanid um Erbium und/oder um Neodym handelt.

11. Verfahren nach einem beliebigen der Ansprüche 9 und 10,
**dadurch gekennzeichnet,**
**dass** das Glas nach Formung wie folgt thermisch behandelt wird:
Das geformte Glas (Rohlinge, Rohre) wird eine bestimmte Zeit lang, in der Größenordnung zwischen 20 min bis 45 min, durch eine Folge von mindestens drei unabhängigen, in der Flussreihenfolge durchnummerierten Heizkammem hindurch zwischen der Temperatur am Austritt aus dem Ofen und der Temperatur am Austritt aus den Kästen befördert, wobei die Temperatur in dem Kasten Nr. 2 in der Größenordnung zwischen 520 °C und 580 °C, vorteilhafterweise in der Größenordnung zwischen 540°C und 565°C liegt.

12. Verfahren zur Herstellung eines roten Glases nach einem beliebigen der Ansprüche 9 bis 11,
**dadurch gekennzeichnet,**
**dass** das Kupfer in Form von Kupfer(II)-oxid oder rotem Kupferoxid Cu₂O zugesetzt wird, wobei ein Teil des Kupfers zusätzlich durch Kupfer(II)-chlorid bereitgestellt wird.

13. Verfahren zur Herstellung eines roten Glases nach einem beliebigen der Ansprüche 9 bis 12,
**dadurch gekennzeichnet,**
**dass** das Zinn in Form von Zinn(II)-oxid (SnO) oder in Zinn(IV)-Form (SnO₂) zugesetzt wird.

14. Kolben aus rotem Glas für ein Beleuchtungssystem, welcher aus einem Rohling oder aus einem Rohr erzielt wird, die mit dem Glas nach einem beliebigen der Ansprüche 1 bis 8 hergestellt werden, zur Verwendung als Brems- oder Signalisierungsleuchte für Kraftfahrzeuge.

## Claims

1. Red glass tinted in the mass formed from a vitrifiable mixture based on a silico-sodo-calcic composition, **characterised in that** per 100% by weight of mixture said mixture comprises from 0.1% to 1% by weight of copper, from 0.2% to 2% by weight of tin and from 0.01 to 2.5% by weight of oxide from the group of the lanthanides and/or from 0.01 to 0.5% by weight of silver in the form of silver oxide or silver nitrate.

2. Red glass according to claim 1, **characterised in that** the lanthanide is erbium or neodymium.

3. Red glass according to any one of the preceding claims, **characterised in that** the copper is introduced in the form of cuprous oxide or red copper oxide Cu₂O, a part of the copper also being provided by cupric chloride.

4. Red glass according to any one of the preceding claims, **characterised in that** the dimensions of the particles of copper are of the order of 10 to of the order of 100 nm.

5. Red glass according to claim 4, **characterised in that** the dimensions of the particles of copper are between of the order of 30 and of the order of 70 nm.

6. Red glass according to any one of the preceding claims, **characterised in that** the tin is introduced in the form of stannous oxide (SnO) or in the form of stannic oxide (SnO₂).

7. Red glass according to any one of the preceding claims, **characterised in that** the mixture comprises reductants favouring the conversion of the oxide into metallic copper in the state of extreme division selected from the following elements: pulverized coke, coal, carbon, sugar, bismuth, tartar, metallic powders (regulus of antimony, zinc, aluminium).

8. Red glass tinted in the mass based on a sodo-calcic composition according to claim 1, comprising per 100% by weight of molten glass:
| | |
|---|---|
| SiO₂ : | 69 - 75 % |
| Na₂O: | between 2 and 8% |
| K₂O: | between 5 and 15% |
| B₂O₃: | between 0.5 and 4% |
| LiO₂: | between 0.1 and 3% |
| CaO: | between 5 and 9% |
| MgO: | between 0.2 and 1% |
| Al₂O₃: | between 0.2 and 2% |
| CuO: | between 0.2 and 1.5% |
| SnO: | between 0.2 and 2% |
| Cl: | between 0.02 and 0.3% |
| Er₂O₃: | between 0.01 and 2.5% |
| Nd₂O₃: | between 0 and 2.5% |
| Ag₂O: | between 0 and 0.5% |
knowing that at least a proportion of the copper is introduced in the form of cupric chloride (CuCl₂) the role of which is to participate in the refinement and to improve transmission.

9. Method for producing a red glass from a mixture based on a silico-sodo-calcic composition, **characterised in that** per 100% by weight of mixture, from 0.1% to 1% by weight of copper, from 0.2% to 2% by weight of tin and from 0.01 to 2.5% by weight of oxide of lanthanide and/or from 0.01 to 0.5 % by weight of silver in the form of silver oxide or silver nitrate are added to the mixture.

10. Method for producing a red glass according to claim 9, **characterised in that** the lanthanide is erbium and/or neodymium.

11. Method according to any one of claims 9 and 10, **characterised in that** after forming the glass is heat treated in the following manner:
for a given time of between of the order of 20 minutes and of the order of 45 minutes the formed glass (blanks, tubes) is conveyed through a series of at least three independent heating chambers numbered in the order of circulation of the flux, between the furnace exit temperature and the chamber exit temperature, the temperature inside chamber no. 2 being between of the order of 520°C and 580°C, advantageously between of the order of 540°C and 565°C.

12. Method for producing a red glass according to any one of claims 9 to 11, **characterised in that** the copper is introduced in the form of cuprous oxide or red copper oxide Cu₂O, a part of the copper also being provided by cupric chloride.

13. Method for producing a red glass according to any one of claims 9 to 12, **characterised in that** the tin is introduced in the form of stannous oxide (SnO) or in the form of stannic oxide (SnO₂).

14. Bulb made of red glass for a lighting system obtained from a blank or a tube produced with the glass according to any one of claims 1 to 8, for use as a stop light or signalling light for motor vehicles.
